# EUROPÄISCHE PATENTSCHRIFT

(11) **EP 3 368 268 B1**
(45) Veröffentlichungstag und Bekanntmachung des Hinweises auf die Patenterteilung: **27.05.2020**
(21) Anmeldenummer: 16757571.1
(22) Anmeldetag: 05.08.2016
(51) Int. Cl.: B29C 45/76, G05B 19/042, G05B 19/409, G05B 23/02

(54) **KUNSTSTOFF-SPRITZGIESSMASCHINE MIT EINEM DATENSPEICHER ZUM SPEICHERN VON TEXT- UND/ODER BILDINFORMATIONEN**
PLASTIC INJECTION MOULDING MACHINE WITH DATA STORAGE FOR STORING TEXT AND/OR IMAGE INFORMATION
MACHINE À MOULER PAR INJECTION DES MATIÈRES PLASTIQUES AVEC STOCKAGE DE DONNÉES POUR STOCKER DE L'INFORMATION DE TEXTE ET/OU D'IMAGE

(30) Priorität: 30.10.2015 DE 102015118570
(43) Veröffentlichungstag der Anmeldung: 05.09.2018
(73) Patentinhaber: KraussMaffei Technologies GmbH, 80997 München (DE)
(72) Erfinder: GRIMM, Günther, 86567 Hilgertshausen (DE)
(74) Vertreter: Wilhelm, Ludwig
(86) Internationale Anmeldenummer: PCT/EP2016/068800
(87) Internationale Veröffentlichungsnummer: WO 2017/071850

(56) Entgegenhaltungen:
- EP-A2- 1 271 271
- WO-A1-02/23287
- WO-A1-2007/028721
- DE-U1-202015 103 287
- "Selogica - the control unit for all ALLROUNDER injection moulding machines", 20020501, 1. Mai 2002 (2002-05-01), Seiten 1-31, XP002305034,
- Anonymous: "Die intuitive Steuerung der Zukunft MC6 Multitouch", , 1. August 2015 (2015-08-01), Seiten 1-12, XP055321871, Gefunden im Internet: URL:http://www.kraussmaffei.com/media/file s/kmdownloadlocal/de/IMM_MC6Multitouch_de. pdf [gefunden am 2016-11-22]

## Beschreibung

Die Erfindung betrifft eine Kunststoff-Spritzgießmaschine, aufweisend eine Spritzeinheit zum Aufbereiten einer zu formenden Kunststoffmasse, eine Schließeinheit mit wenigstens einem Spritzwerkzeug, das wenigstens eine Kavität aufweist, in welche die von der Spritzeinheit aufbereitete Kunststoffmasse eingespritzt wird, um ein Formteil herzustellen, sowie aufweisend eine Maschinensteuerung, die ausgebildet ist, in Abhängigkeit eines auf der Maschinensteuerung ablaufenden Maschinenprogramms die Spritzeinheit und die Schließeinheit anzusteuern und eine mit der Maschinensteuerung kommunizierende Benutzerschnittstellenvorrichtung, die wenigstens einen Bildschirm zur Darstellung von Bildinformationen aufweist.

Aus der WO 2007/028721 A1 ist eine Spritzgießanlage bekannt, mit einer Spritzgießmaschine umfassend eine Einspritzeinheit und eine Schließeinheit mit Spritzgießwerkzeugen zur Herstellung von Formteilen sowie einen Bildschirm, und mit einem die Spritzgießmaschine selbst und gegebenenfalls Peripheriegeräte umfassenden Arbeitsraum, bei der eine oder mehrere Kameras zur Überwachung des Arbeitsraums vorgesehen sind, wobei die Bilder der verschiedenen Kameras selektiv nacheinander und/oder simultan auf dem Bildschirm darstellbar sind. Die Bilder der Kameras können über einen vorgebbaren Zeitraum aufgezeichnet werden.

Die US 2004/0088073 A1 beschreibt eine Mensch-Maschine-Schnittstelle, die eine Eingabeeinheit aufweist, über die Textinformationen als elektronische Daten erfasst werden können und einen Speicher in dem die über die Eingabeeinheit eingegebenen Textinformationen als elektronische Daten gespeichert werden. Außerdem umfasst die Mensch-Maschine-Schnittstelle dabei eine Befehlseinheit zum Anzeigen der Textinformationen und eine Anzeigesteuerungseinheit, die ausgebildet ist, die Textinformationen anzuzeigen und zwar auf einem Display gemäß den Befehlen der Befehlseinheit.

Die WO 2006/089451 A1 beschreibt ein Verfahren zur Steuerung und Bedienung einer Produktionszelle zur Herstellung von Kunststoff-Spritzgießteilen mit wenigstens eines Teiles der ihr zugeordneten Peripheriegeräte, wobei der Produktionsablauf durch den Benutzer vorgegeben und parametriert wird, und Maschinenabläufe auf der Basis von verhaltensvollständigen Komponenten, die zusammen ein Domänenmodell bilden, mit Hilfe einer Domänensprache erstellt, verwaltet und ausgeführt werden, um die Bedienung und den Betrieb einer Spritzgießmaschine auf eine einfach erlernbare und durchgängige Art und Weise zu ermöglichen.

Die AT 513666 A1 beschreibt eine Bedieneinheit für eine Spritzgießmaschine mit einem Bildschirm, einer Datenverarbeitungseinrichtung und wenigstens einer Handtaste zur Bedienung von Spritzgießmaschinenelementen, wobei zu Spritzgießelementen gehörige, in der Spritzgießmaschine vorliegende Informationen von der Datenverarbeitungseinrichtung abrufbar sind.

Die DE 10 2006 017 499 A1 beschreibt eine Steuerungsvorrichtung zum Verwenden in einer Spritzgießmaschine, die einen Temperatursteuerungsabschnitt aufweist, der die Temperaturen von Teilen des Zylinders auf vorbestimmte Werte durch Steuern der Heizungen steuert; die eine Verschiebungsminustemperatureinstellspeicher aufwesit, der eine Verschiebungsminustemperatur auf gleichförmig unterhalb der Steuerungstemperaturen der Teile einstellt; die einem Verschiebungsabsoluttemperatureinstellspeicher aufweist, der eine Verschiebungsabsoluttemperatur unterhalb der Steuerungstemperaturen der Teile auf eine vorbestimmte Temperatur einstellt; und die ein Auswahlmittel aufweist, das die in den Temperatureinstellspeichern eingestellten Temperaturen auf unterhalb der Temperatur der Teile, gesteuert durch den Temperatursteuerungsabschnitt, auswählt.

Die WO 02/23287 A1 beschreibt eine Kunststoff-Spritzgießmaschine, die eine Steuervorrichtung aufweist, welche zum Anzeigen von Audio- / Videoinformationen eingerichtet ist. Die Steuervorrichtung umfasst auch Programme zum Speichern von Audio-/ Videoinformationen in Form von Dateien.

Aufgabe der Erfindung ist es, eine Kunststoff-Spritzgießmaschine zu schaffen, bei der Maschinenzustände und/oder Ereignisse an der Kunststoff-Spritzgießmaschine einem Maschinenbediener besonders anschaulich vermittelt werden können.

Die Aufgabe wird gelöst durch eine Kunststoff-Spritzgießmaschine, aufweisend eine Spritzeinheit zum Aufbereiten einer zu formenden Kunststoffmasse, eine Schließeinheit mit wenigstens einem Spritzwerkzeug, das wenigstens eine Kavität aufweist, in welche die von der Spritzeinheit aufbereitete Kunststoffmasse eingespritzt wird, um ein Formteil herzustellen, sowie aufweisend eine Maschinensteuerung, die ausgebildet ist, in Abhängigkeit eines auf der Maschinensteuerung ablaufenden Maschinenprogramms die Spritzeinheit und die Schließeinheit anzusteuern und eine mit der Maschinensteuerung kommunizierende Benutzerschnittstellenvorrichtung, die wenigstens einen Bildschirm zur Darstellung von Bildinformationen aufweist, wobei die Maschinensteuerung einen Datenspeicher zum Speichern der Text- und/oder Bildinformationen in Form von mehreren Datensätzen aufweist und die Maschinensteuerung einen Ablaufgenerator aufweist, der zum manuellen Zuordnen jeweils eines Datensatzes zu einem Zustandsparameter der Kunststoff-Spritzgießmaschine ausgebildet ist, und der Ablaufgenerator des Weiteren ausgebildet ist, den jeweiligen Datensatz in Abhängigkeit des zugeordneten Zustandsparameters automatisch in den Datenspeicher zu schreiben oder automatisch zum Anzeigen auf dem Bildschirm auszulesen, wobei der Ablaufgenerator in einem Programmiermodus zum manuellen Zuordnen jeweils eines Datensatzes zu einem Zustandsparameter der Kunststoff-Spritzgießmaschine betreibbar ist, und in einem Ablaufmodus betreibbar ist, in dem der jeweilige Datensatz in Abhängigkeit des zugeordneten Zustandsparameters automatisch in den Datenspeicher geschrieben wird oder automatisch zum Anzeigen auf dem Bildschirm ausgelesen wird, und wobei die Maschinensteuerung eingerichtet ist, Bildinformationen der von wenigstens einer Kamera der Kunststoff-Spritzgießmaschine erfassten Bilder aus dem Bereich der Kunststoff-Spritzgießmaschine automatisch aufzuzeichnen und in Abhängigkeit eines Zustandsparameters der Kunststoff-Spritzgießmaschine in dem Datenspeicher abzulegen.

Ein manuelles Zuordnen kann dadurch erfolgen, dass die Benutzerschnittstellenvorrichtung wenigstens ein Eingabemittel aufweist, das ausgebildet ist, auf Grundlage einer manuellen Eingabe durch einen Maschinenbediener einem aktivierten Datensatz einen ausgewählten Zustandsparameter zuzuordnen. Eine solche Zuordnung kann in Form einer logischen Verknüpfung des Datensatzes mit dem Zustandsparameter abgespeichert werden. So kann ein Maschinenbediener bzw. ein Betreiber der Kunststoff-Spritzgießmaschine unabhängig einer werksseitigen Einstellung des Herstellers der Kunststoff-Spritzgießmaschine eigene Kommunikationsabläufe vorgeben, d.h. programmieren. Derartige Kommunikationsabläufe können aufgezeichnet werden und in der Maschinensteuerung zum späteren Abruf gespeichert und zur späteren automatischen Ausführung aktiviert werden. In solchen Kommunikationsabläufen kann bspw. vorgesehen sein, dass auf dem Bildschirm der Benutzerschnittstellenvorrichtung Text oder Bilder in Form von Einzelbildern, in Form von Bildsequenzen oder in Form eines Videofilms in Abhängigkeit eines bestimmten, zugeordneten Maschinenzustands der Kunststoff-Spritzgießmaschine automatisch angezeigt werden. Die Benutzerschnittstellenvorrichtung kann außerdem wenigstens ein Eingabemittel aufweisen, das ausgebildet ist, zum manuellen Quittieren eines auf dem Bildschirm angezeigten Textes oder angezeigter Bilder in Form von Einzelbildern, in Form von Bildsequenzen oder in Form eines Videofilms.

Der Ablaufgenerator kann in einem Programmiermodus zum manuellen Zuordnen jeweils eines Datensatzes zu einem Zustandsparameter der Kunststoff-Spritzgießmaschine betreibbar sein, und in einem Ablaufmodus betreibbar sein, in dem der jeweilige Datensatz in Abhängigkeit des zugeordneten Zustandsparameters automatisch in den Datenspeicher geschrieben wird oder automatisch zum Anzeigen auf dem Bildschirm ausgelesen wird. So kann bspw. eine Kamera eine Szene an der Kunststoff-Spritzgießmaschine kontinuierlich erfassen und im Falle einer Störungsmeldung, die einen Zustandsparameter der Kunststoff-Spritzgießmaschine darstellt, die kontinuierlich erfasste Szene, bspw. in Form eines Videos, in dem Datenspeicher dauerhaft speichern, und zwar sogar für einen Zeitraum, der bereits vor dem Ereignis liegt, das die Störung und folglich die Störungsmeldung ausgelöst hat. Tritt keine Störung auf, wird die von der Kamera erfasste Szene nicht dauerhaft gespeichert, sondern verworfen und der Datenspeicher bleibt frei.

Die Kunststoff-Spritzgießmaschine weist wenigstens eine Kamera auf, die ausgebildet ist, Bilder der Umgebung der Kunststoff-Spritzgießmaschine in Form von Bildinformationen zu erfassen und die Maschinensteuerung kann dabei ausgebildet sein, die Bildinformationen in dem Datenspeicher zu schreiben bzw. aufzuzeichnen und die Bildinformationen wieder aus dem Datenspeicher auszulesen und auf dem Bildschirm anzuzeigen. Die Maschinensteuerung kann eingerichtet sein, in Abhängigkeit eines Zustandsparameters der Kunststoff-Spritzgießmaschine die im Datenspeicher gespeicherten Bildinformationen auf dem Bildschirm automatisch anzuzeigen.

Eine Kunststoff-Spritzgießmaschine umfasst im Allgemeinen zumindest eine Spritzeinheit zum Aufbereiten einer zu formenden Kunststoffmasse, eine am vorderen Ende der Spritzeinheit angeordnete Spritzdüse, die an ein Spritzwerkzeug ankoppelbar ist, das Spritzwerkzeug und eine Schließeinheit, welche üblicher Weise auf einem Maschinengestell der Kunststoff-Spritzgießmaschine angeordnet ist und eine feststehende Formaufspannplatte und eine bewegliche Formaufspannplatte aufweist. Das Spritzwerkzeug umfasst wenigstens zwei Formhälften, von denen die eine Formhälfte auf der feststehenden Formaufspannplatte befestigt ist und die andere Formhälfte auf der bewegliche Formaufspannplatte befestigt ist, derart, dass bei einem Öffnen der Schließeinheit, d.h. bei einem Auseinanderfahren von feststehender Formaufspannplatte und beweglicher Formaufspannplatte die mindestens eine Kavität des Spritzwerkzeugs freigegeben wird. Die Spritzeinheit kann einen oder mehrere Extruder aufweisen, die jeweils ausgebildet sind, wenigstens ein Kunststoffvorprodukt, wie beispielsweise ein Kunststoff-Granulat zu schmelzen, zu vermischen und zu homogenisieren, ggf. zu entgasen. Jeder Extruder kann für die Zuführung von bspw. eines Kunststoff-Granulats außerdem einen Aufgabetrichter aufweisen.

Die Kunststoff-Spritzgießmaschine weist mehrere Maschinenteile auf. Gewisse Maschinenteile können beweglich gelagert sein und mittels eines Motors oder Antriebs, insbesondere hydraulischen oder elektrischen Motors bzw. hydraulischen oder elektrischen Antriebs automatisch oder in einem Handfahrbetrieb manuell gesteuert bewegt werden. So stellt ein beispielhaftes Maschinenteil die Schließeinheit dar, welche angesteuert von der Maschinensteuerung der Kunststoff-Spritzgießmaschine, gemäß eines in der Maschinensteuerung ablaufenden Maschinenprogramms, automatisch oder in einem Handfahrbetrieb bspw. mittels der Benutzerschnittstellenvorrichtung manuell gesteuert, geöffnet oder geschlossen werden kann. Ein anderes beispielhaftes Maschinenteil stellt die Spritzeinheit dar, welche angesteuert von der Maschinensteuerung der Kunststoff-Spritzgießmaschine, gemäß eines in der Maschinensteuerung ablaufenden Maschinenprogramms, automatisch oder in einem Handfahrbetrieb bspw. mittels der Benutzerschnittstellenvorrichtung manuell gesteuert, betrieben werden kann, beispielsweise durch Ansteuern oder Regeln der Drehzahl einer Förderschnecke der Spritzeinheit oder durch Ansteuern oder Regeln wenigstens einer Heizvorrichtung der Spritzeinheit.

Die Benutzerschnittstellenvorrichtung kann wenigstens ein Eingabemittel und wenigstens ein Ausgabemittel aufweisen. Mindestens ein Ausgabemittel kann als ein Bildschirm ausgebildet sein. Die Benutzerschnittstellenvorrichtung kann, abgesehen von einer geringen Anzahl von sicherheitsrelevanten elektro-mechanischen Eingabemitteln, wie bspw. eines Notaus-Schalters, im Wesentlichen allein von einem einzigen Bildschirm gebildet werden. Der Bildschirm kann als ein Touch-Bildschirm ausgebildet sein und insoweit sowohl Ausgabemittel, als auch Eingabemittel aufweisen. Die Benutzerschnittstellenvorrichtung kann ein Gehäuse aufweisen, das eine Vorderseite und eine Rückseite umfasst, wobei an der Vorderseite der Bildschirm angeordnet ist.

Indem die Maschinensteuerung einen Datenspeicher zum Speichern von Bildinformationen der aufgezeichneten Bilder aufweist und die Maschinensteuerung eingerichtet ist, in Abhängigkeit eines Zustandsparameters der Kunststoff-Spritzgießmaschine die im Datenspeicher gespeicherten Bildinformationen auf dem Bildschirm automatisch anzuzeigen, können Maschinenzustände und/oder Ereignisse an der Kunststoff-Spritzgießmaschine einem Maschinenbediener besonders anschaulich vermittelt werden. Im Stand der Technik können lediglich einzelne Bilder, d.h. statische Aufnahmen auf manuelle Anforderung des Maschinenbedieners hin angezeigt werden, wo hingegen mit der erfindungsgemäßen Lösung Bilder, aber auch Bildsequenzen, Filmsequenzen, Videofilme und/oder Ton, bzw. auch gesprochener Text und Musik ausgegeben werden kann, und zwar automatisch ausgelöst durch die Maschinensteuerung in Abhängigkeit eines Ereignisses und/oder eines Maschinenzustands der Kunststoff-Spritzgießmaschine.

Die Maschinensteuerung ist eingerichtet, in Abhängigkeit eines Zustandsparameters der Kunststoff-Spritzgießmaschine Bilder aus dem Bereich der Kunststoff-Spritzgießmaschine automatisch aufzuzeichnen und als Bildinformationen in dem Datenspeicher abzulegen.

Der Datenspeicher kann zum Speichern von Bildinformationen oder weiteren Multimediainformationen ausgebildet sein und die Maschinensteuerung kann dabei eingerichtet sein, in Abhängigkeit eines Zustandsparameters der Kunststoff-Spritzgießmaschine die Bildinformationen bzw. die weiteren Multimediainformationen aufzuzeichnen, anzuzeigen, oder in dem Datenspeicher abzulegen.

Der Zustandsparameter der Kunststoff-Spritzgießmaschine kann ein Programmbefehl in einer Abfolge von mehreren Programmbefehlen des Maschinenprogramms sein. Alternativ oder ergänzend zu einem Programmbefehl kann der Zustandsparameter der Kunststoff-Spritzgießmaschine ein Sensorsignal sein, das von einem mit der Maschinensteuerung kommunizierenden, wenigstens einen Prozessparameter der Kunststoff-Spritzgießmaschine überwachenden Sensor der Kunststoff-Spritzgießmaschine bereitgestellt wird.

Alternativ oder ergänzend zu einem Programmbefehl oder einem Sensorsignal kann der Zustandsparameter der Kunststoff-Spritzgießmaschine ein eine Störung an der Kunststoff-Spritzgießmaschine repräsentierendes Steuerungssignal sein.

Die Maschinensteuerung kann ausgebildet sein, einer jeweiligen Störungsart zugeordnete Bilder in Form von Einzelbildern, in Form von Bildsequenzen bzw. Filmsequenzen oder in Form eines Videofilms auf dem Bildschirm der Benutzerschnittstellenvorrichtung automatisch anzuzeigen, wenn das der Maschinensteuerung mitteilte Steuerungssignal eine die Störungsart kennzeichnende Information enthält.

Die Maschinensteuerung kann dabei generell zum manuellen Eingeben und zum Speichern und Ausgeben von indizierten Text- und/oder Bildinformationen an der Kunststoff-Spritzgießmaschine ausgebildet sein und die im Datenspeicher gespeicherten Bildinformationen können dabei einer jeweiligen Text- und/oder Bildinformation zugeordnet sein.

Eine an der Kunststoff-Spritzgießmaschine vorhandene grafische und/oder textorientierte Programmierumgebung kann dadurch um eine frei programmierbare Applikation erweitert werden. Dabei kann die frei programmierbare Applikation Programmbefehle für Multimediakomponenten enthalten. Die frei programmierbare Applikation kann demgemäß Programmbefehle zum Aufzeichnen von Ton, Bild und/oder Film- bzw. Videosequenzen enthalten. Ein solches Aufzeichnen kann zu Dokumentationszwecken erfolgen. Ein solches Aufzeichnen kann Ereignisse an der Kunststoff-Spritzgießmaschine aufzeichnen und beispielsweise auch Sensorsignale erfassen und aufzeichnen.

Damit kann der Maschinenbediener bzw. ein Anwender der frei programmierbaren Applikation an der Kunststoff-Spritzgießmaschine auf bestimmte Ereignisse und/oder Zustände in der Maschinenprogrammierung reagieren und ein automatisiertes Aufzeichnen starten bzw. auch wieder anhalten. Mit den aufgezeichneten Bildinformationen bzw. den aufgezeichneten Ton, Bild und/oder Film- bzw. Videosequenzen können einerseits bspw. Ereignisse dokumentiert werden oder bspw. eine Aufzeichnung während eines bestimmten Fehlverhaltens bzw. Fehlzustands der Kunststoff-Spritzgießmaschine zu einem späteren Zeitpunkt angesehen werden, bspw. um das Fehlverhalten bzw. den Fehlzustand analysieren zu können.

Es können aber auch vorgegeben Handlungsanweisungen in Form von Ton, Bild und/oder Film- bzw. Videosequenzen aufgezeichnet in dem Datenspeicher abgelegt sein und auf dem Bildschirm automatisch angezeigt werden und zwar in Abhängigkeit der Art des Fehlverhaltens bzw. des Fehlzustands der Kunststoff-Spritzgießmaschine. So kann dem Maschinenbediener automatisch angezeigt bzw. vorgespielt werden, welche Maßnahmen zu ergreifen sind, bspw. welche Handgriffe der Maschinenbediener manuell ausführen soll, um das Fehlverhalten bzw. den Fehlzustand zu beheben. Damit kann der Maschinenbediener auf bestimmte Ereignisse bzw. Zustände an der Kunststoff-Spritzgießmaschine reagieren und zwar gemäß den fest hinterlegten bzw. programmierten Handlungsanweisungen, die dann auf dem Bildschirm der Benutzerschnittstellenvorrichtung zeigen, wie der Maschinenbediener sich in dem jeweiligen Fall verhalten soll. Außerdem kann die Maschinensteuerung eingerichtet sein, eine Aktion des Maschinenbedieners quittieren zu lassen und den weiteren automatischen Ablauf eines Maschinenprogramms erst dann zuzulassen, wenn der Maschinenbediener tatsächlich quittiert hat. So kann vorgesehen sein, dass im Fall, dass bspw. eine Maschinensicherung anspricht, der Maschinenbediener aufgefordert wird alle Formnester, d.h. Kavitäten mit Hilfe einer Prüfvorrichtung manuell zu überprüfen, um festzustellen, dass keine Materialreste in den Formnestern verblieben sind, was aufgezeichnet werden kann, und wonach ein erneutes Anfahren der Kunststoff-Spritzgießmaschine erst dann erfolgt, wenn die Aufnahme abgespeichert wurde bzw. der Maschinenbediener die Durchführung der Aufforderung quittiert hat.

Die Benutzerschnittstellenvorrichtung kann wenigstens ein Eingabemittel aufweisen und die Maschinensteuerung eingerichtet sein, bei einem manuellen Betätigen des wenigstens einen Eingabemittels die Bilder aufzuzeichnen und als Bildinformationen in dem Datenspeicher abzulegen.

Die Maschinensteuerung kann ausgebildet sein, die Bilder in Form von Einzelbildern, in Form von Bildsequenzen oder in Form eines Videofilms aufzuzeichnen und auf dem Datenspeicher abzulegen.

Ein beispielhafter Anwendungsfall für die Erfindung kann bspw. die Herstellung von Sicherheitsbauteilen sein, bei denen vor einem Umspritzen mit Kunststoff ein sicherheitsrelevantes Einlegeteil in die Spritzgießform eingelegt wird, welches nach dem Spritzvorgang zumindest teilweise oder sogar vollständig umspritzt und somit nicht mehr erkennbar ist. Nach einem Entformen kann das sicherheitsrelevante Einlegeteil nicht mehr identifiziert werden. Indem der Vorgang des Einlegens des sicherheitsrelevanten Einlegeteils in die Spritzgießform aufgezeichnet wird und ggf. auch dokumentiert wird, insbesondere indiziert als zum Spitzteil zugehörig, kann der Spritzvorgang jederzeit nachvollzogen werden. Hierbei kann schon die Aufnahme nur eines Fotos ausreichen oder es kann eine Bildsequenz oder ein Videofilm aufgenommen werden. Jedes sicherheitsrelevante Einlegeteil kann auch ein individuelles Kennzeichen, wie bspw. einen Zahlencode aufweisen, das durch die Aufnahme mit erfasst und auf dem Datenspeicher abgespeichert wird.

Mittels zusätzlicher Programmbefehle in der frei programmierbaren Applikation können auch andere Informationen, wie bspw. ein Datum, eine Uhrzeit oder der aktuelle Wert eines Stückzahlzählers der Kunststoff-Spritzgießmaschine in der Aufnahme mit erfasst und auf dem Datenspeicher abgespeichert werden.

Ergänzend können auch Vorgänge beim Zusammenbau komplexer Bauteile oder Teile der Kunststoff-Spritzgießmaschine während einer Montage insbesondere als Videosequenz aufgezeichnet werden. Solche Aufzeichnungen können dann auch bspw. auftragsgebunden zu Nachweiszwecken abgespeichert werden. Generell können so auch manuelle Tätigkeiten bspw. des Maschinenbedieners an der Kunststoff-Spritzgießmaschine erfasst und auf dem Datenspeicher abgespeichert werden.

Ein exemplarisches Ausführungsbeispiel der Erfindung ist in der nachfolgenden Figurenbeschreibung unter Bezugnahme auf die beigefügten schematischen Figuren näher erläutert. Konkrete Merkmale dieses Ausführungsbeispiels können unabhängig davon, in welchem konkreten Zusammenhang sie erwähnt sind, gegebenenfalls auch einzeln oder in anderen Kombinationen betrachtet, allgemeine Merkmale der Erfindung darstellen.

Es zeigen:
- Fig. 1: eine schematische Darstellung einer beispielhaften ersten Ausführungsvariante einer Kunststoff-Spritzgießmaschine mit einer Benutzerschnittstellenvorrichtung,
- Fig. 2: eine schematische Darstellung einer beispielhaften Ausführungsvariante einer Benutzerschnittstellenvorrichtung, und
- Fig. 3: eine schematische Darstellung einer beispielhaften Maschinensteuerung.

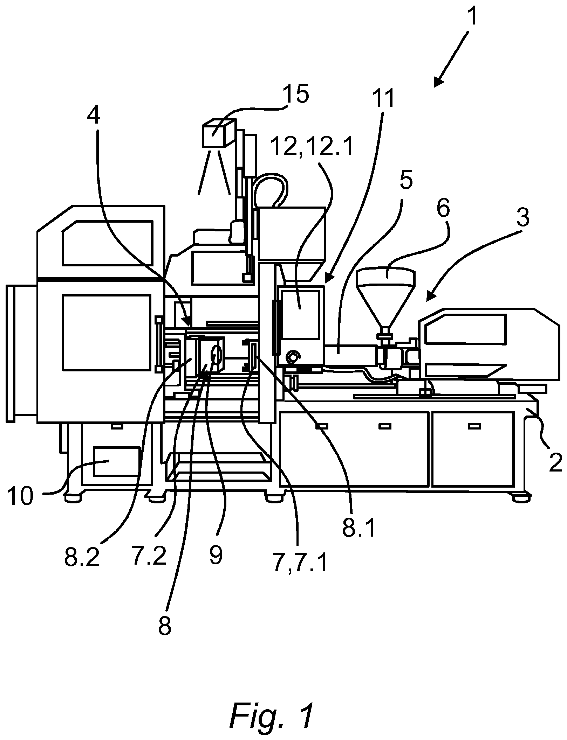

Die in Fig. 1 gezeigte, beispielhafte Kunststoff-Spritzgießmaschine 1 weist ein Maschinengestell 2 auf, auf dem eine Spritzeinheit 3 und eine Schließeinheit 4 angeordnet sind.

Die Spritzeinheit 3 dient zum Aufbereiten einer zu formenden Kunststoffmasse. Die Spritzeinheit 3 weist im Falle des vorliegenden Ausführungsbeispiels einen Extruder 5 auf. Der Extruder 5 ist ausgebildet, wenigstens ein Kunststoffvorprodukt, wie beispielsweise ein Kunststoff-Granulat zu schmelzen, zu vermischen und zu homogenisieren, ggf. zu entgasen. Der Extruder 5 weist dazu, bzw. für die Zuführung von bspw. des Kunststoff-Granulats einen Aufgabetrichter 6 auf.

An einem vorderen Ende der Spritzeinheit 3 bzw. an einem vorderen Ende des Extruders 5 ist eine nicht näher dargestellte Spritzdüse angeordnet, die an ein Spritzwerkzeug 7 angekoppelt ist. Das Spritzwerkzeug 7 ist in einer Schließeinheit 8 der Kunststoff-Spritzgießmaschine 1 angeordnet, welche üblicher Weise auf dem Maschinengestell 2 der Kunststoff-Spritzgießmaschinel angeordnet ist und eine feststehende Formaufspannplatte 8.1 und eine bewegliche Formaufspannplatte 8.2 aufweist. Das Spritzwerkzeug 7 umfasst wenigstens zwei Formhälften 7.1 und 7.2, von denen die eine Formhälfte 7.1 auf der feststehenden Formaufspannplatte 8.1 befestigt ist und die andere Formhälfte 7.2 auf der bewegliche Formaufspannplatte 8.2 befestigt ist, derart, dass bei einem Öffnen der Schließeinheit 8, d.h. bei einem Auseinanderfahren von feststehender Formaufspannplatte 8.1 und beweglicher Formaufspannplatte 8.2 mindestens eine Kavität 9 des Spritzwerkzeugs 7 freigegeben wird.

Die Kunststoff-Spritzgießmaschine 1 weist demgemäß mehrere Maschinenteile auf. Gewisse Maschinenteile können beweglich gelagert sein und mittels eines Motors oder Antriebs, insbesondere hydraulischen oder elektrischen Motors bzw. hydraulischen oder elektrischen Antriebs automatisch oder in einem Handfahrbetrieb manuell gesteuert bewegt werden. So stellt ein beispielhaftes Maschinenteil die Schließeinheit 4 dar, welche angesteuert von einer Maschinensteuerung 10 der Kunststoff-Spritzgießmaschine 1, gemäß eines in der Maschinensteuerung 10 ablaufenden Maschinenprogramms, automatisch oder in einem Handfahrbetrieb bspw. mittels einer Benutzerschnittstellenvorrichtung 11 der Kunststoff-Spritzgießmaschine 1 manuell gesteuert, geöffnet oder geschlossen werden kann. Ein anderes beispielhaftes Maschinenteil stellt die Spritzeinheit 3 dar, welche angesteuert von der Maschinensteuerung 10 der Kunststoff-Spritzgießmaschine 1, gemäß eines in der Maschinensteuerung 10 ablaufenden Maschinenprogramms, automatisch oder in einem Handfahrbetrieb bspw. mittels der Benutzerschnittstellenvorrichtung 11 manuell gesteuert, betrieben werden kann, beispielsweise durch Ansteuern oder Regeln der Drehzahl des Extruders 5 oder durch Ansteuern oder Regeln wenigstens einer nicht näher dargestellten Heizvorrichtung der Spritzeinheit 3.

Die Maschinensteuerung 10 ist eingerichtet, Bildinformationen der von wenigstens einer Kamera 15 der Kunststoff-Spritzgießmaschine 1 erfassten Bilder aus dem Bereich der Kunststoff-Spritzgießmaschine 1 automatisch aufzuzeichnen und in Abhängigkeit eines Zustandsparameters der Kunststoff-Spritzgießmaschine 1 in dem Datenspeicher 17 abzulegen.

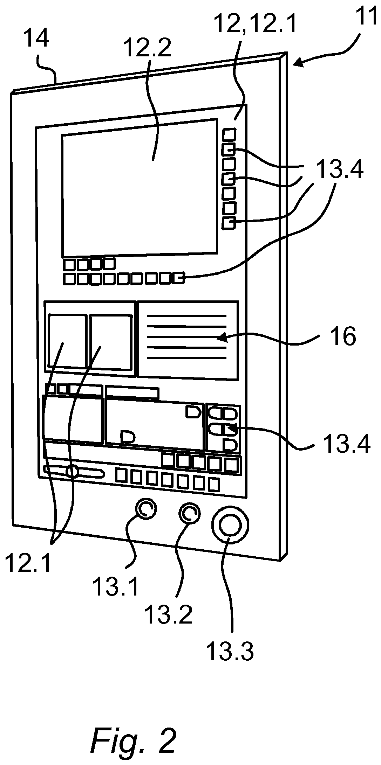

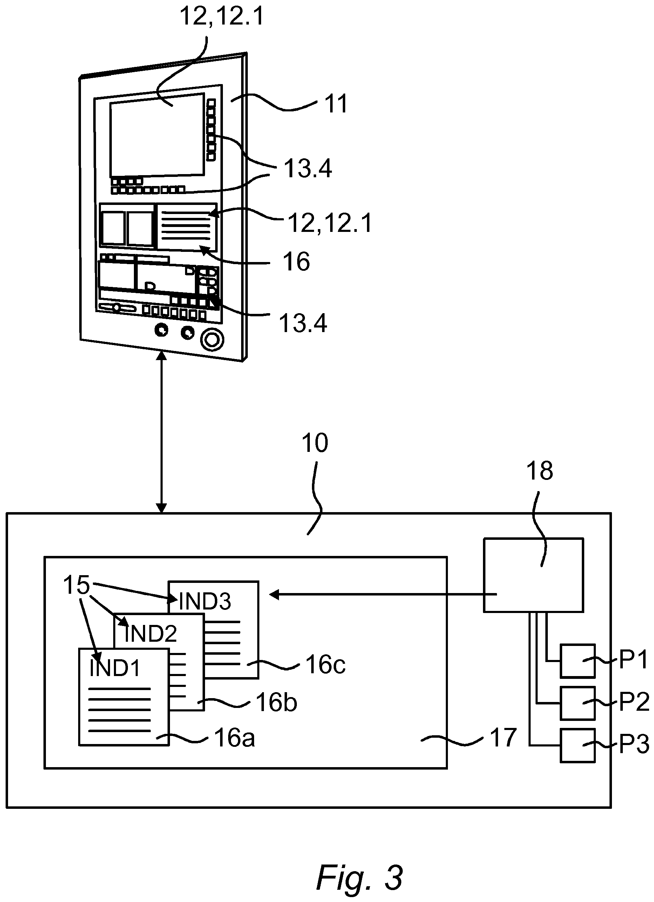

Wie insbesondere in Fig. 2 dargestellt, weist die mit der Maschinensteuerung 10 kommunizierende Benutzerschnittstellenvorrichtung 11 im Falle des vorliegenden Ausführungsbeispiels ein Gehäuse 14, mehrere Eingabemittel 13.1-13.4 und Ausgabemittel 12 auf, wobei wenigstens ein Ausgabemittel 12 als ein Bildschirm 12.1 ausgebildet ist. Die Maschinensteuerung 10 ist dabei zum manuellen Eingeben und zum Speichern und Ausgeben von indizierten Text- und/oder Bildinformationen 16 an der Kunststoff-Spritzgießmaschine 1, d.h. zum Ausgeben an dem Ausgabemittel 12 bzw. an dem Bildschirm 12.1 der Benutzerschnittstellenvorrichtung 11 ausgebildet, wobei die im Datenspeicher 17 (Fig. 3) gespeicherten Bildinformationen einer jeweiligen indizierten Text- und/oder Bildinformation 16, 16a, 16b, 16c zugeordnet sind.

Demgemäß weist die Maschinensteuerung 10, wie in Fig. 3 schematisch gezeigt, den Datenspeicher 17 zum Speichern von Bildinformationen oder weiteren Multimediainformationen auf, wobei die Maschinensteuerung 10 eingerichtet ist, in Abhängigkeit eines Zustandsparameters der Kunststoff-Spritzgießmaschine 1 die Bildinformationen bzw. die weiteren Multimediainformationen aufzuzeichnen, anzuzeigen, oder in dem Datenspeicher 17 abzulegen.

Die Maschinensteuerung 10 weist den Datenspeicher 17 zum Speichern der Text-und/oder Bildinformationen in Form von mehreren Datensätzen auf und einen Ablaufgenerator 18, der zum manuellen Zuordnen jeweils eines Datensatzes zu einem Zustandsparameter P1, P2, P3 der Kunststoff-Spritzgießmaschine 1 ausgebildet ist, und der Ablaufgenerator 18 des Weiteren ausgebildet ist, den jeweiligen Datensatz in Abhängigkeit des zugeordneten Zustandsparameters P1, P2, P3 automatisch in den Datenspeicher 17 zu schreiben oder automatisch zum Anzeigen auf dem Bildschirm 12.1 auszulesen.

Der Ablaufgenerator 18 ist in einem Programmiermodus zum manuellen Zuordnen jeweils eines Datensatzes zu einem Zustandsparameter P1, P2, P3 der Kunststoff-Spritzgießmaschine 1 betreibbar, und in einem Ablaufmodus betreibbar, in dem der jeweilige Datensatz in Abhängigkeit des zugeordneten Zustandsparameters P1, P2, P3 automatisch in den Datenspeicher 17 geschrieben wird oder automatisch zum Anzeigen auf dem Bildschirm 12.1 ausgelesen wird.

### Bezugszeichenliste

- 1: Kunststoff-Spritzgießmaschine
- 2: Maschinengestell
- 3: Spritzeinheit
- 4: Schließeinheit
- 5: Extruder
- 6: Aufgabetrichter
- 7: Spritzwerkzeug
- 7.1: eine Formhälfte
- 7.2: andere Formhälfte
- 8: Schließeinheit
- 8.1: feststehende Formaufspannplatte
- 8.2: bewegliche Formaufspannplatte
- 9: Kavität
- 10: Maschinensteuerung
- 11: Benutzerschnittstellenvorrichtung
- 12: Ausgabemittel
- 12.1: Bildschirm
- 13.1-13.4: Eingabemittel
- 14: Gehäuse
- 15: Kamera
- 16: Text- und/oder Bildinformationen
- 17: Datenspeicher
- 18: Ablaufgenerator
- P1, P2, P3: Zustandsparameter

## Patentansprüche

1. Kunststoff-Spritzgießmaschine, aufweisend eine Spritzeinheit (3) zum Aufbereiten einer zu formenden Kunststoffmasse, eine Schließeinheit (4) mit wenigstens einem Spritzwerkzeug (7), das wenigstens eine Kavität (9) aufweist, in welche die von der Spritzeinheit (3) aufbereitete Kunststoffmasse eingespritzt wird, um ein Formteil herzustellen, sowie aufweisend eine Maschinensteuerung (10), die ausgebildet ist, in Abhängigkeit eines auf der Maschinensteuerung (10) ablaufenden Maschinenprogramms, die Spritzeinheit (3) und die Schließeinheit (4) anzusteuern und eine mit der Maschinensteuerung (10) kommunizierende Benutzerschnittstellenvorrichtung (11), die wenigstens einen Bildschirm (12.1) zur Darstellung von Text- und/oder Bildinformationen (16) aufweist, wobei die Maschinensteuerung (10) einen Datenspeicher (17) zum Speichern der Text- und/oder Bildinformationen in Form von mehreren Datensätzen aufweist und die Maschinensteuerung (10) einen Ablaufgenerator (18) aufweist, der zum manuellen Zuordnen jeweils eines Datensatzes zu einem Zustandsparameter (P1, P2, P3) der Kunststoff-Spritzgießmaschine (1) ausgebildet ist, und der Ablaufgenerator (18) des Weiteren ausgebildet ist, den jeweiligen Datensatz in Abhängigkeit des zugeordneten Zustandsparameters (P1, P2, P3) automatisch in den Datenspeicher (17) zu schreiben oder automatisch zum Anzeigen auf dem Bildschirm (12.1) auszulesen, wobei der Ablaufgenerator (18) in einem Programmiermodus zum manuellen Zuordnen jeweils eines Datensatzes zu einem Zustandsparameter (P1, P2, P3) der Kunststoff-Spritzgießmaschine (1) betreibbar ist, und in einem Ablaufmodus betreibbar ist, in dem der jeweilige Datensatz in Abhängigkeit des zugeordneten Zustandsparameters (P1, P2, P3) automatisch in den Datenspeicher (17) geschrieben wird oder automatisch zum Anzeigen auf dem Bildschirm (12.1) ausgelesen wird, **dadurch gekennzeichnet, dass** die Maschinensteuerung (10) eingerichtet ist, Bildinformationen (16) der von wenigstens einer Kamera (15) der Kunststoff-Spritzgießmaschine (1) erfassten Bilder aus dem Bereich der Kunststoff-Spritzgießmaschine (1) automatisch aufzuzeichnen und in Abhängigkeit eines Zustandsparameters (P1, P2, P3) der Kunststoff-Spritzgießmaschine (1) in dem Datenspeicher (17) abzulegen.

2. Kunststoff-Spritzgießmaschine nach Anspruch 1,
**dadurch gekennzeichnet, dass** der Datenspeicher (17) zum Speichern von Bildinformationen (16) oder weiteren Multimediainformationen ausgebildet ist und die Maschinensteuerung (10) eingerichtet ist, in Abhängigkeit eines Zustandsparameters (P1, P2, P3) der Kunststoff-Spritzgießmaschine (1) die Bildinformationen (16) bzw. die weiteren Multimediainformationen aufzuzeichnen, anzuzeigen, oder in dem Datenspeicher (17) abzulegen.

3. Kunststoff-Spritzgießmaschine nach Anspruch 1 oder 2,
**dadurch gekennzeichnet, dass** der Zustandsparameter (P1, P2, P3) der Kunststoff-Spritzgießmaschine (1) ein Programmbefehl in einer Abfolge von mehreren Programmbefehlen des Maschinenprogramms ist.

4. Kunststoff-Spritzgießmaschine nach einem der Ansprüche 1 bis 3,
**dadurch gekennzeichnet, dass** der Zustandsparameter (P1, P2, P3) der Kunststoff-Spritzgießmaschine (1) ein Sensorsignal ist, das von einem mit der Maschinensteuerung (10) kommunizierenden, wenigstens einen Prozessparameter der Kunststoff-Spritzgießmaschine (1) überwachenden Sensor der Kunststoff-Spritzgießmaschine (1) bereitgestellt wird.

5. Kunststoff-Spritzgießmaschine nach einem der Ansprüche 1 bis 4,
**dadurch gekennzeichnet, dass** der Zustandsparameter (P1, P2, P3) der Kunststoff-Spritzgießmaschine (1) ein eine Störung an der Kunststoff-Spritzgießmaschine (1) repräsentierendes Steuerungssignal ist.

6. Kunststoff-Spritzgießmaschine nach Anspruch 5,
**dadurch gekennzeichnet, dass** die Maschinensteuerung (10) ausgebildet ist, einer jeweiligen Störungsart zugeordnete Bilder in Form von Einzelbildern, in Form von Bildsequenzen oder in Form eines Videofilms auf dem Bildschirm (12.1) der Benutzerschnittstellenvorrichtung (11) automatisch anzuzeigen, wenn das der Maschinensteuerung (10) mitteilte Steuerungssignal eine die Störungsart kennzeichnende Information enthält.

7. Kunststoff-Spritzgießmaschine nach einem der Ansprüche 1 bis 6,
**dadurch gekennzeichnet, dass** die Maschinensteuerung (10) zum manuellen Eingeben und zum Speichern und Ausgeben von indizierten Text- und/oder Bildinformationen (16) an der Kunststoff-Spritzgießmaschine (1) ausgebildet ist und die im Datenspeicher (17) gespeicherten Bildinformationen einer jeweiligen Text- und/oder Bildinformation (16) zugeordnet sind.

8. Kunststoff-Spritzgießmaschine nach einem der Ansprüche 1 bis 7,
**dadurch gekennzeichnet, dass** die Benutzerschnittstellenvorrichtung (11) wenigstens ein Eingabemittel (13.1-13.3) aufweist und die Maschinensteuerung (10) eingerichtet ist, bei einem manuellen Betätigen des wenigstens einen Eingabemittels (13.1-13.3) die Bilder aufzuzeichnen und als Bildinformationen in dem Datenspeicher (17) abzulegen.

## Claims

1. A plastic injection moulding machine, having an injection unit (3) for processing a plastic mass which is to be moulded, a clamping unit (4) with at least one injection moulding tool (7), which has at least one cavity (9), into which plastic mass processed by the injection unit (3) is injected, in order to produce a moulded part, and having a machine controller (10) which is configured to control the injection unit (3) and the clamping unit (4) as a function of a machine program running on the machine controller (10), and a user interface device (11) communicating with the machine controller (10), which user interface device has at least one screen (12.1) for displaying text- and/or image information (16), wherein the machine controller (10) has a data storage (17) for storing the text- and/or image information in the form of several data sets, and the machine controller (10) has a process generator (18), which is configured for the manual assigning respectively of a data set to a state parameter (P1, P2, P3) of the plastic injection moulding machine (1), and the process generator (18) is further configured to automatically write the respective data set into the data storage (17) as a function of the assigned state parameter (P1, P2, P3) or to automatically read it out for display on the screen (12.1), wherein the process generator (18) is operable in a programming mode for the manual assigning respectively of a data set to a state parameter (P1, P2, P3) of the plastic injection moulding machine (1), and is operable in a process mode in which the respective data set as a function of the assigned state parameter (P1, P2, P3) is automatically written into the data storage (17) or is automatically read out for display on the screen (12.1), **characterized in that** the machine controller (10) is arranged to automatically record image information (16) of the images captured from at least one camera (15) of the plastic injection moulding machine (1) from the region of the plastic injection moulding machine (1), and to read it as a function of a state parameter (P1, P2, P3) of the plastic injection moulding machine (1) in the data storage (17) .

2. The plastic injection moulding machine according to Claim 1,
**characterized in that** the data storage (17) is configured for the storing of image information (16) or further multimedia information, and the machine controller (10) is arranged, as a function of an state parameter (P1, P2, P3) of the plastic injection moulding machine (1), to record, display, or deposit in the data storage (17) the image information (16) or respectively the further multimedia information.

3. The plastic injection moulding machine according to Claim 1 or 2,
**characterized in that** the state parameter (P1, P2, P3) of the plastic injection moulding machine (1) is a program command in a sequence of several program commands of the machine program.

4. The plastic injection moulding machine according to one of Claims 1 to 3,
**characterized in that** the state parameter (P1, P2, P3) of the plastic injection moulding machine (1) is a sensor signal which is provided by a sensor of the plastic injection moulding machine (1) communicating with the machine controller (10), monitoring at least one process parameter of the plastic injection moulding machine (1).

5. The plastic injection moulding machine according to one of Claims 1 to 4,
**characterized in that** the state parameter (P1, P2, P3) of the plastic injection moulding machine (1) is a control signal representing a malfunction at the plastic injection moulding machine (1).

6. The plastic injection moulding machine according to Claim 5,
**characterized in that** the machine controller (10) is configured to automatically display images, assigned to a respective malfunction type, in the form of individual images, in the form of image sequences or in the form of a video film, on the screen (12.1) of the user interface device (11), when the control signal conveyed to the machine controller (10) contains an item of information characterizing the malfunction type.

7. The plastic injection moulding machine according to one of Claims 1 to 6,
**characterized in that** the machine controller (10) is configured for the manual inputting and for the storing and outputting of indicated text- and/or image information (16) at the plastic injection moulding machine (1), and the image information stored in the data storage (17) is assigned to a respective item of text- and/or image information (16) .

8. The plastic injection moulding machine according to one of Claims 1 to 7,
**characterized in that** the user interface device (11) has at least one input means (13.1 - 13.3), and the machine controller (10) is arranged, with a manual actuating of the at least one input means (13.1 - 13.3), to record the images and to deposit them as image information in the data storage (17) .

## Revendications

1. Machine à mouler par injection des matières plastiques, présentant une unité d'injection. (3) pour fournir une masse de plastique à mouler, une unité de fermeture (4) comprenant au moins un outil de moulage (7) qui présente au moins une cavité (9) dans laquelle la masse de plastique fournie par l'unité d'injection (3) est injectée pour fabriquer une pièce moulée, ainsi que présentant une commande de machine (10) qui est conçue, en fonction d'un programme de machine tournant sur la commande de machine (10), pour piloter l'unité d'injection (3) et l'unité de fermeture (4) et un dispositif d'interface utilisateur (11) communiquant avec la commande de machine (10), qui présente au moins un écran (12.1) pour afficher des informations de texte et/ou d'image (16), dans lequel la commande de machine (10) présente une mémoire de données (17) pour mettre en mémoire les informations de texte et/ou d'image sous forme de plusieurs jeux de données et la commande de machine (10) présente un générateur de séquences (18) qui est conçu pour attribuer manuellement respectivement un jeu de données à un paramètre d'état (P1, P2, P3) de la machine à mouler par injection des matières plastiques (1), et le générateur de séquences (18) est en outre conçu pour écrire automatiquement dans la mémoire de données (17) et lire automatiquement pour l'affichage sur l'écran (12.1), le jeu de données respectif en fonction du paramètre d'état (P1, P2, P3) attribué, dans lequel le générateur de séquences (18) peut être mis dans un mode de programmation pour l'attribution manuelle respectivement d'un jeu de données à un paramètre d'état (P1, P2, P3) de la machine à mouler par injection des matières plastiques (1), et peut être mis dans un mode de séquence dans lequel le jeu de données respectif est écrit automatiquement dans la mémoire de données (17) ou est lu automatiquement pour l'affichage sur l'écran (12.1) en fonction du paramètre d'état (P1, P2, P3) attribué, **caractérisé en ce que** la commande de machine (10) est conçue pour enregistrer automatiquement et placer dans la mémoire de données (17) en fonction d'un paramètre d'état (P1, P2, P3) de la machine à mouler par injection des matières plastiques (1), des informations d'images (16) des images saisies par l'au moins une caméra (15) de la machine à mouler par injection des matières plastiques (1) hors de la zone de la machine à mouler par injection des matières plastiques (1).

2. Machine à mouler par injection des matières plastiques selon la revendication 1,
**caractérisé en ce que** la mémoire de données (17) est conçue pour mettre en mémoire des informations d'image (16) ou d'autres informations multimédia et la machine de commande (10) est conçue pour, en fonction d'un paramètre d'état (P1, P2, P3) de la machine à mouler par injection des matières plastiques (1), enregistrer, afficher ou placer dans la mémoire de données (17), les informations d'images (16), respectivement les autres informations multimédia.

3. Machine à mouler par injection des matières plastiques selon la revendication 1 ou 2,
**caractérisé en ce que** le paramètre d'état (P1, P2, P3) de la machine à mouler par injection des matières plastiques (1) est une commande de programme dans une série de plusieurs commandes de programme du programme de machine.

4. Machine à mouler par injection des matières plastiques selon l'une des revendications 1 à 3,
**caractérisé en ce que** le paramètre d'état (P1, P2, P3) de la machine à mouler par injection des matières plastiques (1) est un signal de capteur qui est fourni par un capteur de la machine à mouler par injection des matières plastiques (1) communiquant avec la commande de machine (10), surveillant au moins un paramètre de procédé de la machine à mouler par injection des matières plastiques (1) .

5. Machine à mouler par injection des matières plastiques selon l'une des revendications 1 à 4,
**caractérisé en ce que** le paramètre d'état (P1, P2, P3) de la machine à mouler par injection des matières plastiques (1) est un signal de commande représentant une défaillance sur la machine à mouler par injection des matières plastiques (1).

6. Machine à mouler par injection des matières plastiques selon la revendication 5,
**caractérisé en ce que** la commande de machine (10) est conçue pour afficher automatiquement des images attribuées à un type de défaillance respectif sous forme d'images individuelles, sous forme de séquences d'images ou sous forme d'un film vidéo sur l'écran (12.1) du dispositif d'interface utilisateur (11), lorsque le signal de commande communiqué à la commande de machine (10) contient une information identifiant le type de défaillance.

7. Machine à mouler par injection des matières plastiques selon l'une des revendications 1 à 6,
**caractérisé en ce que** la commande de machine (10) est conçue pour la saisie manuelle et pour l'enregistrement et l'émission d'informations de texte et/ou d'image (16) indexées à la machine à mouler par injection des matières plastiques (1) et les informations d'image enregistrées dans la mémoire de données (17) sont attribuées à une information de texte et/ou d'image (16) respective.

8. Machine à mouler par injection des matières plastiques selon l'une des revendications 1 à 7,
**caractérisé en ce que** le dispositif d'interface utilisateur (11) présente au moins un moyen de saisie (13.1 - 13.3) et la commande de machine (10) est conçue, lors d'un actionnement manuel de l'au moins un moyen de saisie (13.1 - 13.3), pour enregistrer et placer les images dans la mémoire de données (17) en tant qu'informations d'image.
